# EUROPEAN PATENT APPLICATION

(11) **EP 1 496 417 A1**
(43) Date of publication of application: **12.01.2005**
(21) Application number: 03746475.7
(22) Date of filing: 14.04.2003
(51) Int. Cl.: G06F 1/00, G06F 15/00, G06F 15/02, A61B 5/117

(54) **INFORMATION DEVICE**

(30) Priority: 15.04.2002 JP 2002111713
(71) Applicant: MATSUSHITA ELECTRIC INDUSTRIAL CO., LTD., Kadoma-shi, Osaka 571-8501 (JP)
(72) Inventor: KUSAKARI, Takashi, Yokohama-shi, Kanagawa 246-0022 (JP); MORITA, Kaoru, Yokohama-shi, Kanagawa 235-0021 (JP); WATANABE, Satoshi, Yokohama-shi, Kanagawa 220-0054 (JP)
(74) Representative: Grünecker, Kinkeldey, Stockmair & Schwanhäusser Anwaltssozietät
(86) International application number: PCT/JP2003/004691
(87) International publication number: WO 2003/088016

(57) **Abstract**

The information device collates the authentic information of an authenticatee with the registered authentic information, comprising an authentic information storage for storing registered authentic information; an information storage for storing specified information; a read information storing section in which information on reading of specified information is stored for each authenticatee; a collating section for collating the authentic information of the authenticatee with the registered authentic information; and an information reader for reading information corresponding to the authenticatee from the specified information in accordance with the information on reading of the specified information.

## Description

### FIELD OF THE INVENTION

The present invention relates to an information device such as a cellular phone, PDA, and personal computer. More particularly, it relates to an information device which collates authentic information attained from an authenticatee with the registered authentic information in order to certify the authenticity of the authenticatee.

### BACKGROUND OF THE INVENTION

Recently, information devices such as cellular phones, PDA (Personal Digital Assistant), and personal computers are rapidly prevailing. Particularly, in cellular phones, the prevalence of network-compatible devices equipped with mailers and the like which are compatible with Web browser and Internet is rapid and remarkable. Using such network-compatible cellular phones to read information on a network such as Internet or to exchange electronic information such as electronic mails is very popular at present.

Also, in recent years, a cellular phone may store a great deal of information the user wants to keep private and unknown to others such as the history of outgoing and incoming signals such as telephone and mail, the contents of mails, the addresses of other persons, and the schedules of individuals. On the other hand, an ordinary cellular phone being small-sized and light-weight is liable to be lost or stolen.

Accordingly, for example, when a cellular phone is lent to a person, private information as above mentioned easily becomes available to the person. Therefore, many users feel great resistance to lending their cellular phones to others. Furthermore, there is a big problem that in case of losing or being stolen, a third person who is not the original user will be rather easy to make the key operation such as password input the same as the user's, using the cellular phone in place of the user or so-called in the disguise of the user.

There are various technologies disclosed so far in order to prevent such information leakage due to lending or disguising by third persons.

For example, Japanese Laid-open Patent No. 2001-274897 discloses a configuration of a cellular phone equipped with a fingerprint authenticating device which is one of authenticating systems using biometrics.

In the case of the above configuration, in certifying the authenticity, the fingerprint information input from the fingerprint reader such as an electrostatic capacity element or the like is collated with the fingerprint information already registered in order to certify the authenticity, thereby intending to solve the security problem of the cellular phone and to prevent information leakage or the problem of disguising.

However, in such a cellular phone having the above configuration, a fingerprint authenticating system is employed for certifying the authenticity of the user, and therefore, in case the fingers are too much dry or wet, it is difficult to obtain fingerprint information appropriate for collation. Also, it is extremely difficult to certify the authenticity of the user when the fingerprint itself is too faint due to overstraining of the fingertips or when it is unable to obtain fingerprint information itself because of injured fingers. Moreover, many users do not consent to taking fingerprints. Therefore, it cannot be said that the authenticity certifying system is most appropriate for cellular phones.

### SUMMARY OF THE INVENTION

In order to solve the above problem, the present invention is intended to provide an information device which may prevent leakage of private information even when the information device is lent to other person or one information device is used by many persons and also may assure a high level of security by preventing the device from being used by a third person in disguise even when lost or stolen with respect to the information and the contents of applications and the like that the users want to be protected.

The information device of the present invention is an information device for collating the authentic information of an authenticatee with the registered authentic information. The information device comprises an authentic information storage for storing registered authentic information; an information storage for storing specified information; a read information storing section in which information on reading of specified information is stored for each authenticatee; a collating section for collating the authentic information of the authenticatee with registered authentic information; and an information reader for reading information corresponding to the authenticatee out of the specified information in accordance with information on reading of the specified information.

In the case of this configuration, since different pieces of information such as application or mode starting programs and initial settings are read in accordance with different authenticatees, even when the device is lent to other person, there will be no leakage of private information, and even if stolen, it will be able to prevent disguising by a third person, thereby assuring a high level of security with respect to the information of applications or the like to be protected. Further, even when one information device is used by many persons, since different using mode programs or different applications are read for different authenticatees, there will be no leakage of private information, thereby realizing a high level of security.

Also, the information reader is preferable to be configured in that mode setting programs corresponding to the authenticatees are read from the information storage.

According to the configuration, it is possible to use the device in different modes for different authenticatees and to realize a high level of security even when the device is used by a plurality of users together.

Further, the information reader is preferable to be configured in that application programs corresponding to the authenticatees are read from the information storage.

By using such configuration, it is possible to obtain a configuration capable of reading different applications for different authenticatees and to realize a high level of security even when the device is used by a plurality of users together.

Further, it is preferable to be configured in that the authentic information is information attained from the eye image of the authenticatee.

According to the configuration, it is possible to realize a configuration imposing less burden on the authenticatee because highly accurate authentic information can be obtained without manual key input operation or like operation by a relatively easy method such that the eye image of the authenticatee is picked up to attain the authentic information.

Further, the authentic information is preferable to be encoded iris pattern information.

By using such configuration, it is possible to make highly accurate authentication with use of iris patterns, thereby assuring a high level of security.

Also, the configuration is preferable to comprise an authentic information collector which collects the authentic information of authenticatees.

By using such configuration, it is possible to collect the authentic information of the authenticatee on the spot from the authenticatee.

Further, it is preferable to be configured in that the authentic information collector is an image photographing device which photographs the eye image of the authenticatee.

According to the configuration, the device may be mounted on various types of equipment since it is possible to collect the authentic information of authenticatees by using a well-known image photographing device using an optical system or the like.

Also, the configuration is preferable to comprise a display section which displays the result of collation at a collating section.

According to the configuration, it is possible to realize a device, easier to use for the user, which displays a welcome message a like message as a guide to recollect the authentic information by showing the result of collation to the user.

Next, the information device of the present invention is an information device for collating the authentic information of an authenticatee with the registered authentic information, comprising an authentic information storage for storing registered authentic information, an information storage for storing specified information, and an attribute discriminator for discriminating the attributes of the authentic information of the authenticatee, wherein there are provided a read information storing section in which information on reading of the specified information corresponding to the attributes of the authentic information of the authenticatee is stored, a collating section for collating the authentic information of the authenticatee with the registered authentic information, and an information reader for reading the information corresponding to the attribute discriminated at the attribute discriminator out of the specified information in accordance with the information on reading of the specified information.

By using such configuration, it is possible to read different application or using mode starting programs according to the difference in attribute of the authentic information collected from same authenticatee and to change over different applications or using modes by inputting authentic information different in attribute even in case of authentication of same person, thereby enabling the realization of a multiple-function device.

Further, the information reader is preferable to be configured in that mode setting programs corresponding to the attributes of the authentic information are read from the information storage.

According to the configuration, it is possible to use the device in different using modes according to the difference in attribute of the authentic information even in case of authentication of same person, thereby enabling the realization of a high-function device.

Further, the information reader is preferable to be configured in that application programs corresponding to the attributes of the authentic information are read from the information storage.

By using such configuration, it is possible to read different application programs according to the difference in attribute of the authentic information even in case of authenticating same person, thereby enabling the realization of a multiple-function device.

Also, it is preferable to be configured in that authentic information is prepared from the eye image of the authenticatee.

According to the configuration, it is possible to realize a configuration imposing less burden on the authenticatee because highly accurate authentic information can be obtained without manual key input operation or like operation by a relatively simple method such that the eye image of the authenticatee is photographed to attain the authentic information.

Further, the authentic information is preferable to be encoded iris pattern information.

According to the configuration, it is possible to execute highly accurate authentication by using iris patterns, thereby assuring a high level of security.

Also, it is preferable to be configured in that the attribute shows whether the authentic information is the information of the right eye or the left eye.

By using such configuration, it is possible for the authenticatee to read different application or using modes according to different eyes in collecting the authentic information and to change over different application or using modes without being noticed by others.

Further, it is preferable to be configured in that the attribute shows the age of the authenticatee.

According to the configuration, it is possible to use the device in different application or using modes in accordance with the age of the authenticatee. For example, trouble due to mischief of a child can be prevented and, for example, the age limit can be imposed on access to the contents.

Also, the configuration is preferable to comprise an authentic information collector which collects the authentic information of the authenticatee.

According to the configuration, it is possible to collect the authentic information of the authenticatee on the spot from the authenticatee.

Further, it is preferable to be configured in that the authentic information collector is an image photographing device which photographs the eye image of the authenticatee.

By using such configuration, it is possible to collect the authentic information of authenticatees by means of a well-known image photographing device using an optical system or the like, making it possible to mount the device in various types of equipment.

Also, the configuration is preferable to comprise a display section which displays the result of collation executed at a collating section.

According to the configuration, it is possible to realize a device, easier to use for the user, which displays a welcome message or a like message as a guide to recollect the authentic information by showing the result of collation to the user.

Further, the configuration is preferable to comprise a password input unit in which the password is input from the authenticatee, wherein the attribute discriminator is able to discriminate the attributes from the combination of the authentic information and the password of the authenticatee.

According to the configuration, it is not limited only to the difference in attribute of the authentic information, but with respect to authentic information having same attribute, it is also possible to use the device in a wider application changeover or using mode in combination of the information and the password input.

Further, it is preferable to be configured in that the authentic information of an authenticatee is collected a plurality of times and the attribute discriminator discriminates the attributes from the combination of the authentic information obtained.

By using such configuration, it is also possible to use the device in a wider application changeover or using mode.

Also, the configuration is preferable to comprise a start signal emitter which emits the start signal of the device, wherein the authentic information collector starts collecting the authentic information of the authenticatee in accordance with the signal from the start signal emitter.

According to the configuration, for example, by using a direct key as a start signal emitter, the collection of authentic information may be started with the key lock released, and thereby, it is possible to realize a device which is easier to use for the authenticatee.

### BRIEF DECRIPTION OF THE DRAWINGS

Fig. 1 is a front view showing the appearance of an information device in the first preferred embodiment of the present invention.
Fig. 2 is a block diagram showing the configuration of an information device in the first preferred embodiment of the present invention.
Fig. 3 is a flow chart showing an authenticating step in the first preferred embodiment of the present invention.
Fig. 4 is a flow chart showing an authenticating step in the second preferred embodiment of the present invention.
Fig. 5 is a diagram showing a display example of an information device in the first preferred embodiment of the present invention.
Fig. 6 is a diagram showing a display example of an information device in the first preferred embodiment of the present invention.
Fig. 7 is a diagram showing a display example of an information device in the second preferred embodiment of the present invention.
Fig. 8 is a diagram showing a display example of an information device in the second preferred embodiment of the present invention.
Fig. 9 is a diagram showing a display example of an information device in the second preferred embodiment of the present invention.

### DETAILED DESCRIPTION OF PREFERRED EMBODIMENT

### (First Preferred Embodiment)

The first preferred embodiment of the present invention will be described by using a cellular phone as an example of an information device.

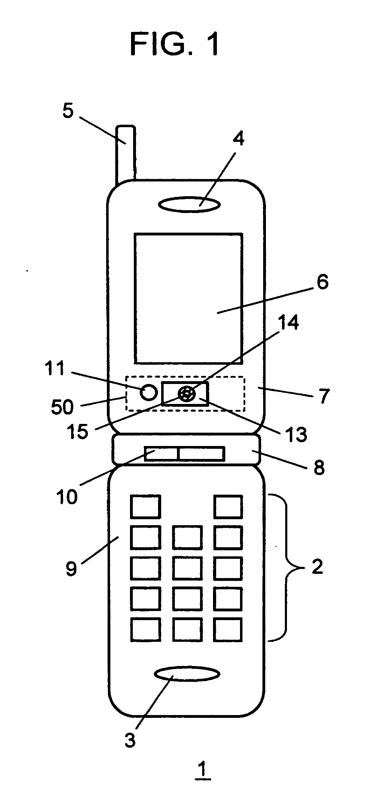

Fig. 1 is a front view showing the appearance of a cellular phone in the first preferred embodiment of the present invention.

Cellular phone 1 of the present preferred embodiment is configured in that upper casing 7 and lower casing 9 are connected via joint 8 having hinge 10 and can be folded. The upper casing 7 is equipped with an antenna 5, a speaker 4 and an iris authenticating device 50 having a display section 6, a light source 11 and a mirror 13. The display section 6 displays to the user by using a display device such as EL (Electro-Luminescent), LCD (Liquid Crystal Display) or the like.

At the central portion of the mirror 13, there is provided an aperture 14 by making a hole in a part of the mirror 13, and an optical system 15 of an image pickup unit is visible at the center thereof from the user.

The lower casing 9 of the cellular phone 1 is equipped with a direct key section 2 for text input such as partners' telephone number input and electronic mail, and the input section of a microphone 3 used for voice input and for making a telephone call.

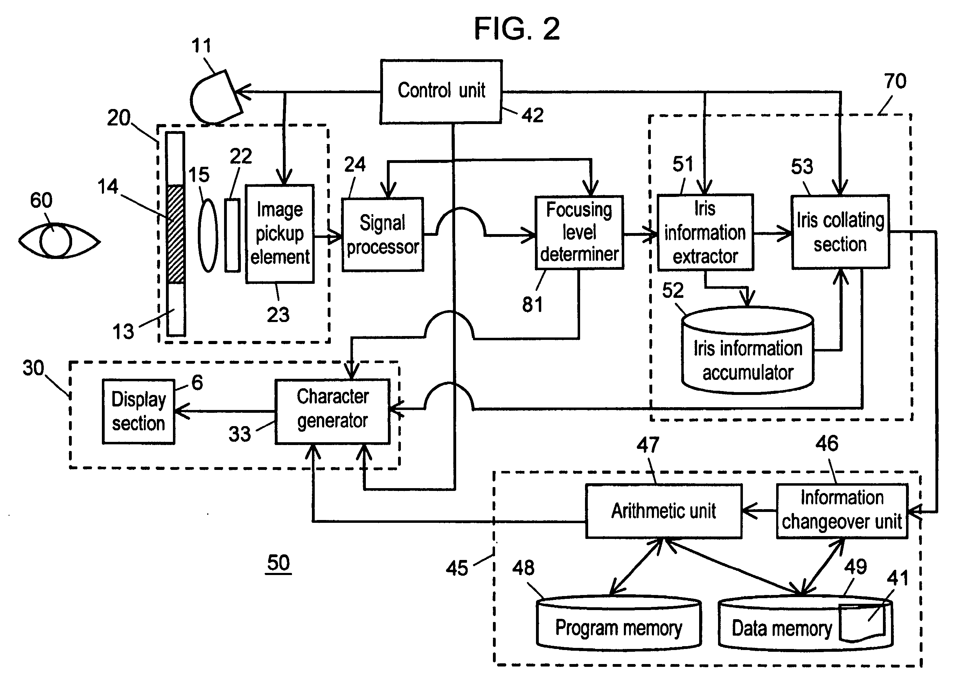

Fig. 2 is a block diagram showing the configuration of the cellular phone 1.

In Fig. 2, the image pickup unit 20 which is for photographing the image of an eye, comprises the mirror 13 with aperture 14, optical system 15, visible light cut filter 22 and an image pickup element 23 using devices such as CCD or CMOS in this order as viewed from the user.

As the optical system 15, it is preferable to use an optical system with a fixed focus or to use an optical system using a zoom lens or auto-focus lens. The iris authenticating device of the present preferred embodiment is mounted in a cellular phone and serves to make the iris authentication of the user at a relatively short distance (about 10 cm to 15 cm), and therefore, in the case of a fixed focus, it is appropriate to use the optical system 15 with the focus set to about 10 cm to 15 cm.

Further, the light source 11 is formed next to the image pickup unit 20, which applies near-infrared rays to the pupil 60 of the user to be authenticated. The iris authentication is executed in such manner that the image reflection at the iris of the near-infrared ray applied from the light source 11 to the pupil 60 of the user is picked up by the image pickup unit 20 and subjected to image processing, and the information (authentic information) encoded by a well-known method is collated with the already accumulated information (registered authentic information) (for example, refer to U.S. Patent Specification No. 5291560).

The iris authenticating device 50 of the present preferred embodiment comprises, in addition to the above configuration, a signal processor 24 which processes the signal of the image obtained by the image pickup element 23 and executes preprocessing such as contrast adjustment and signal digitalizing in order to make it into information usable for iris authentication, and a focusing level determiner 81 which determines whether or not the image is picked up in a state of being focused when an image, the source of the information, is picked up in accordance with the information output from the signal processor 24.

The iris authenticating device 50 further comprises an authenticating section 70. the authenticating section 70 comprises an iris information extractor 51 which extracts information on iris from the input information from the focusing level determiner 81 and encodes the information, an iris information accumulator 52 which is an iris information storage in which the iris data of the right or left eye of the user previously registered is accumulated , and an iris collating section 53 which is a comparison collator for collating the registered authentic information accumulated in the iris information accumulator 52 with the authentic information delivered from the iris information extractor 51 for the purpose of certifying the authenticity.

Also, the iris authenticating device 50 of the present invention comprises a character generator 33 which generates characters for supplying the user with information such as error message and operation guide, and a display means 30 having the display section 6.

Further, there is provided a control unit 42 which is connected to the light source 11, image pickup element 23, signal processor 24, focusing level determiner 81, iris information extractor 51, iris allocating section 53, and character generator 33 for the purpose of controlling each unit.

The configuration of such iris authenticating device 50 comprises, as a personal digital assistant 45 for realizing a function mounted in the cellular phone 1, a user table 41 which is a read information storing section stored with the using mode information (for example, information to start the business mode with the right eye and the private mode with the left eye) of each user or each of the right and left eyes of the same user and the information on the kinds of applications that can be started, a data memory 49 which stores user data such as user's schedule, address book and the history of electronic mail, a program memory 48 in which usable application programs are stored, and an information changeover unit 46 which is connected to the data memory 49 and takes relative using mode information or information on applications that can be started out of the user table 41 every user collated or every attribute such as the right eye or left eye in accordance with the output of the iris allocating section 53 and transmits the information to an arithmetic unit 47, and the arithmetic unit 47 which is connected to the data memory 49 and program memory 48 serving as information storage and executes the reading (setting) or starting operation of each using mode information or application. The information reader comprises the information changeover unit 46 and arithmetic unit 47, but the function of the information reader is preferable to be realized by a single CPU or the like.

Incidentally, the business mode stands for a mode in which the user is able to use information allowed for others to see, that is, information such as business schedules and customers' addresses. And the private mode stands for a mode in which the user is able to use private information not allowed for others to see, for example, the addresses of friends, personal schedules, or the history of personal electronic mail and its contents.

In the preferred embodiment of the present invention, for simplifying the description, the iris information accumulator 52, program memory 48, and data memory 49 are respectively realized by separate storing means, but needless to say, it is preferable to be configured in that all the information is stored in one storing means. Also, in the information device of the present invention, every well-known storing means such as HDD and RAM may be used as a storing means.

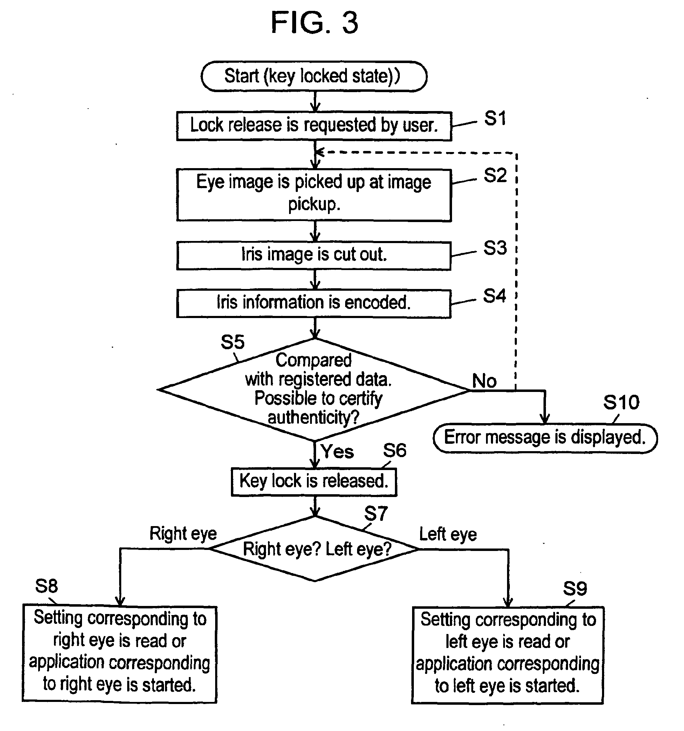

Next, an example of operation of such cellular phone will be described in detail with reference to Fig. 3.

First, by using an example of authentication executed when a user releases the key lock of the cellular phone 1 being in such state that the unit does not function even when a direct key is pushed by the user (hereafter referred to as key locked state), the operation will be described in the following.

When using the cellular phone 1 being in the key locked state, the user pushes a direct key such as a function key necessary to release the key lock, requesting for release of the key lock (S1). In this case, the direct key functions as a start signal emitter.

The control unit 42 of the cellular phone 1 receives the start signal from the direct key and instructs the image pickup unit 20 to pick up the iris image of the user.

In that case, it is preferable to display a message to guide the user, for example, "Reflect your eye in the mirror for checking" or a like message prepared by the character generator 33, or to display a prepared message on the display section 6.

Subsequently, the user reflects his or her pupil 60 in the mirror 13, and in this way, the pupil 60 can be positioned on the optical axis of the image pickup unit 20 in quite a natural manner. Thus, the image pickup unit 20 is able to accurately catch the pupil 60 of the user within the field angle of the optical system 15, enabling the execution of accurate iris authentication.

In this case, according to the cellular phone 1 of the present preferred embodiment, by using the mirror 13 for the purpose of leading the position of the pupil 60 of the user, it is possible to guide the position of the pupil 60 within the field angle of the optical system 15 and to guide the distance between the mirror 13 and the pupil 60 to a predetermined distance.

The above configuration is possible because the legible distance of a person having ordinary vision is about 20 to 30 cm and the image reflected in the mirror is viewed at a distance that is two times the actual distance to the mirror. That is, in use of the cellular phone 1 of the present preferred embodiment, the user is guided in a natural manner so that the distance between the mirror 13 and the pupil 60 is a half of the legible distance or about 10 to 15 cm. By using this function, it is also possible to fix the focal distance of the optical system 15. Further, due to such configuration, the user is guided so that the pupil 60 is positioned at a relatively short distance from the mirror 13, and therefore, the user is spontaneously guided so as to look in the mirror 13 with a single eye. Accordingly, it is possible to easily obtain the iris information for executing the authentication by using the iris patterns of a single eye.

As described above, in the cellular phone 1 of the present preferred embodiment, due to the guiding action using the mirror 13 and the aperture 14 as mention above, the position of the pupil 60 of the user may be guided in a natural manner to a position on the optical axis of the optical system 15 of the image pickup unit and at a predetermined distance away from the mirror 13 without imposing much burden on the user.

In Fig. 3, after the pupil 60 is brought by the user to a predetermined position, the user presses an input key or the like, requesting for release of the key lock, that is, a start signal for starting iris authentication is transmitted to the control unit 42 (S1).

The control unit 42 first turns on the light source 11 and applies the light to the pupil 60. Subsequently, it controls the image pickup element 23, and the iris image information of the pupil 60 obtained through the optical system 15 and the visible light cut filter 22 is transmitted to the signal processor 24 (S2).

In the signal processor 24, the iris image information obtained is subjected to pretreatment such as contrast adjustment and is transmitted to the focusing level determiner 81.

Next, in the iris information extractor 51, the iris portion of the image transmitted from the focusing level determiner 81 is cut out (S3) , and the image information is encoded (S4), and the encoded information is transmitted to the iris information accumulator 52 and also to the iris collating section 53 (as an example of encoding method, the method mentioned in U.S. Patent Specification No. 5291560 can be employed, but the present invention is not limited to this method).

In the iris collating section 53, the authentic information encoded and transmitted is collated with the registered authentic information accumulated in the iris information accumulator 52 (S5).

As a result of collation, when the information corresponds to the registered information, the information about the user and the right or left eye is transmitted to the personal digital assistant 45, and the control unit 42 releases the key lock (S6) .

On the other hand, in case the information does not corresponds to the registered information, an error message for guiding purpose such as "Not authenticated. Try again please" or a like message prepared by the character generator 33 or a previously prepared error message will be displayed on the display section 6 (S10). Or, as shown by a broken line in Fig. 3, it is also preferable to authenticate the iris again, going back to S2.

Next, in the personal digital assistant 45 which functions as a using mode selector or application selector, the information changeover unit 46 takes the readable pieces of using mode information in corresponding relation to each other with respect to the attributes such as the name, the right and left eyes of the authenticated user, output from the iris collating section 53, data of individuals, and information on executable application programs out of the data memory 49 and the user table 41 stored in the data memory 49, and transmits the information to the arithmetic unit 47 (S7).

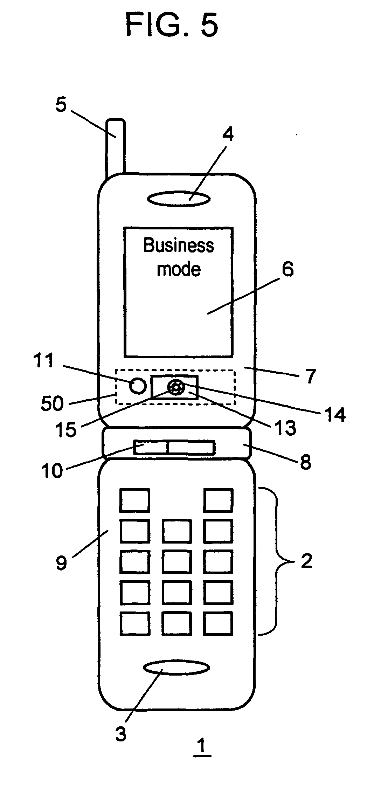

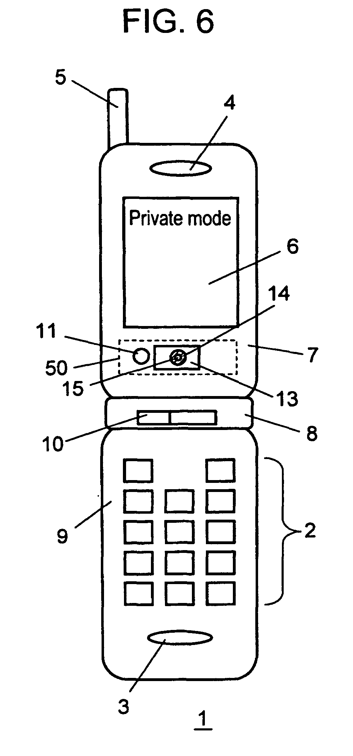

In this way, even when same user is authenticated, a different using mode start program is read into the arithmetic unit 47 due to the difference in attribute. For example, when the right eye of the user is authenticated, the previously established setting for the right eye, for example, the mode allowed for others to see or the set program for business mode is read from the data memory 49 into the arithmetic unit 47, and as shown in Fig. 5, an awaiting screen for business mode is displayed on the display section 6 (S8) . On the other hand, when the left eye of the user is authenticated, the setting for the left eye, for example, the mode not allowed for others to see or the set program for private mode is read from the data memory 49 into the arithmetic unit 47, and as shown in Fig. 6, an awaiting screen for private mode is displayed on the display section 6 (S9).

In the case of specified operation by a user to start an application, it is also possible to change the application to be started for each of the previously authenticated eyes or to change the initial setting or the like to be read at the time of starting the application, and thereby, it is possible to provide cellular phones appropriate to be used by individuals.

Thus, it becomes possible to start different settings or applications according to different attributes such as the same user's right and left eyes or the like to be authenticated or to regulate the start of a predetermined setting or application.

For example, when it becomes necessary to lend others a cellular phone in private mode, it is possible to set the cellular phone to business mode by executing the iris authentication of the right eye without being noticed by others before lending it to others.

In the present preferred embodiment, it has been described that, as to same user, the mode is public mode when the right eye is authenticated and it is private mode when the left eye is authenticated. However, the information device of the present invention is not limited to this configuration. All configured in that different using modes and usable applications are related respectively according to different eyes to be authenticated are included in the information device of the present invention. Also, it is needless to say that a configuration wherein authentication is executed a plurality of times, the order of the eyes authenticated is related to the using mode or usable application, or the input from direct key section 2 or the voice input from microphone 3 is partially combined (for example, "#" key + right eye, etc.) for the purpose of authentication in order to make the result related to the using mode and usable application is also included in the information device of the present invention.

For example, in the information device of the present invention, as an example of making different settings according to different eyes to be authenticated, it is preferable to be configured in that the settings are different with respect to the contents of telephone directories (address books) , incoming signal sound settings, book marks, schedules, awaiting screen, call receive yes/no selection, the contents of mails, image library, the contents of memos, the history of signals received and transmitted, the indication of contents used (using time, using charge, etc.), and usable ranges.

Also, it is preferable to be configured in that the operation to make the eyes to be authenticated corresponding to the using mode and application is executed by the user or by the manager of the cellular phone.

Further, the present preferred embodiment does not place any limitation on the appearance and configuration of the cellular phone of the present invention.

### (Second Preferred Embodiment)

In the first preferred embodiment of the present invention, the example shown is such that same user uses the different eyes to be authenticated, starting different using mode settings and applications, but the information device of the present invention is not limited to this configuration.

In the present preferred embodiment, it is possible to realize an information device capable of assuring a high level of security even when one terminal is used by a plurality of users together.

Also in the present preferred embodiment, the cellular phone 1 is described as an example of information device. The configuration is shown in Fig. 1 and Fig. 2, which is same as described in the first preferred embodiment, and the description is omitted.

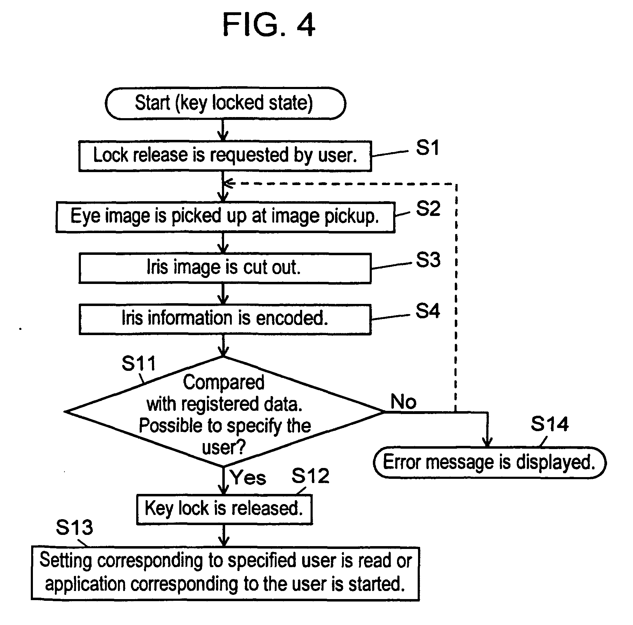

Here, the processing flow in such case that a single terminal is used by a plurality of users will be explained with reference to the flow chart shown in Fig. 4.

Of the configuration shown in Fig.2 of the cellular phone 1 of the present preferred embodiment, the user table 41 which stores information related to using mode settings readable every user, initial setting of application, and application programs startable every user or start-limited is included in the data memory 49.

In the flow chart shown in Fig. 4, the processing steps from step S1 to step S4 are similar to the processing flow of the cellular phone in the first preferred embodiment as shown in Fig. 3, but in the cellular phone of the present preferred embodiment, in step S4, after the iris information is encoded at the iris information extractor 51, the data is compared with the user's previously registered in the iris information accumulator 52, and whether it can be authenticated or not is determined at the iris collating section 53 (S11) . As a result, when the user can be specified, the control unit 42 releases the key lock (S12), and the information changeover unit 46 takes the information related to the authenticated user out of the user table 41 of the data memory 49 and transmits the information to the arithmetic unit 47.

In the arithmetic unit 47, applications, using mode start programs, initial settings and the like related to the authenticated user, transmitted from the information changeover unit 46, are read from the program memory 48 and the data memory 49 serving as information storing sections (S13).

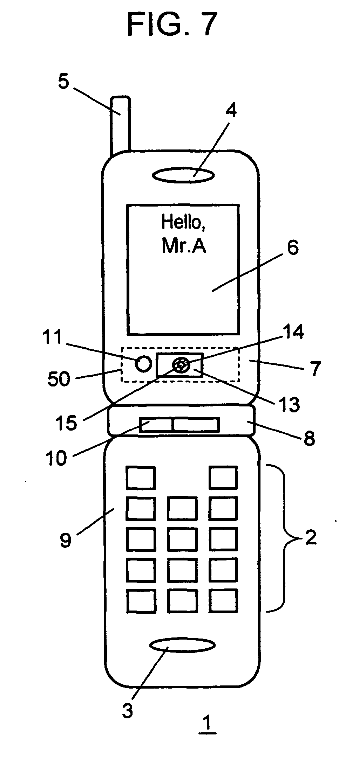

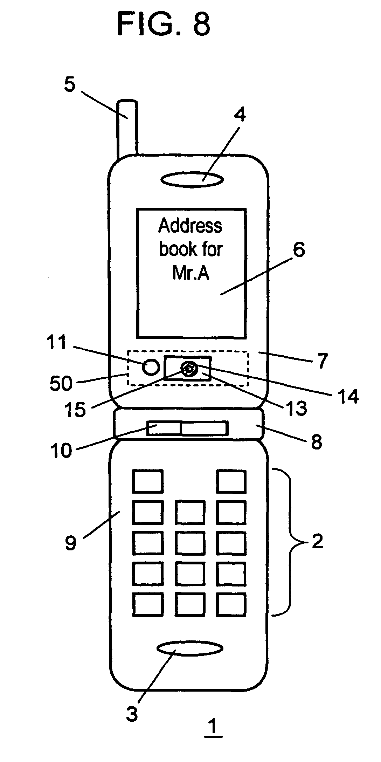

As a result, for example, it is possible to be configured in that a welcome message ("Hello, Mr.A") corresponding to the authenticated user is displayed as shown in Fig. 7, or an application or data ("Address book for Mr.A") or the like customized by the authenticated user is started as shown in Fig. 8. Thus, since it can be configured in that iris authentication is executed when observing data not allowed for others to see or executing an application or the like to be charged, the user is able to safely use his or her data and applications not allowed for others to see.

In the flow chart shown in Fig. 4, when the authentication of the user is impossible in step S11, an error message (for example, "Not authenticated. Try again please." or a like message) is generated at the character generator 33 or an already generated message is displayed on the display section 6 (S14).

By doing such operation for authentication, as to the authenticated user, it is possible to start a previously specified application or to read (set) a using mode start program or the initial setting of an application. On the other hand, with respect to specific users, it is also possible to partially limit the function of the cellular phone.

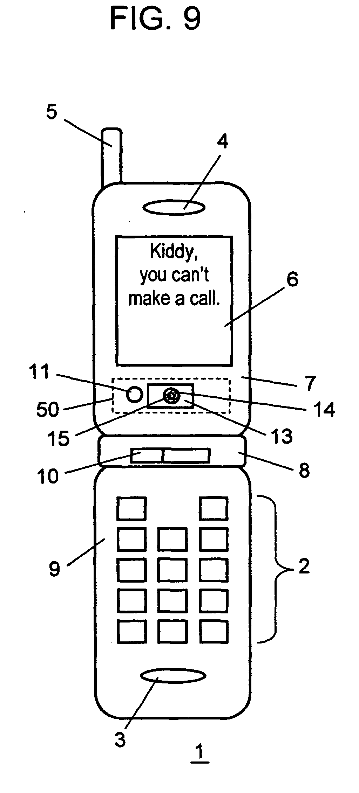

For example, as to young children, doing mischief can be prevented by limiting calling operation on the phone or limiting mail distribution, and it is possible to lend the cellular phone to a child without anxiety. For example, in the case of allowing a child to use a cellular phone with its function limited to receive only, it is possible to call the user's attention by displaying a guide message ("kiddy, you can't make a call" or a like message) on the display section 6 as shown in Fig. 9 when the authenticated child performs the calling operation on the phone. Also, in this case, it can be configured in that other person, for example, a parent may set an application to be limited or refer to the using history later. Because of being able to make such setting, for example, one cellular phone can be used by a whole family.

Also, needless to say, the configuration is preferable to be such that different applications or using modes are read according to other attributes such as sex of authenticatees regardless of age.

Further, in the cellular phone of the present invention, it is possible to have a configuration such that the user is requested to execute such authentication periodically at certain specific intervals or to execute iris authentication each time the device is operated to specify or limit the user such as e-commerce, thereby effectively preventing disguising by a third person or information leakage and realizing a high level of security.

In the information device of the present invention, as an example of making different settings according to different users to be authenticated, it is preferable to be configured in that the settings are different with respect to the contents of telephone directories (address books) , incoming signal sound settings, bookmarks, schedules, awaiting screens, call receive yes/no selection, the contents of mails, image library, the contents of memos, the history of signals received and transmitted, using contents (using time, charge, etc.), and usable ranges.

Also, it can be configured in that the operation to make the user to be authenticated corresponding to the using mode and application is executed by the user or by the manager of the cellular phone. In this way, the manager is able to effectively limit the use of the cellular phone.

In the first and second preferred embodiments, for the purpose of simplifying the description, a cellular phone is used as an example of information device to be described, but the information device of the present invention is not limited to this, and the present invention is of course applicable to other well-known information devices such as PDA and personal computers.

Further, in the first and second preferred embodiments, a configuration by which encoded pieces of iris information are collated with each other for authentication is shown as an iris authenticating system. However, the information device of the present invention is not limited to this configuration. For example, it is of course possible to be configured in that eye images not encoded are collated with each other for certifying the authenticity.

Also, the information device of the present invention is, needless to say, not limited with respect to the method of encoding iris information.

As described above, in the information device of the present invention, since iris authentication is executed as an authenticating method, it is possible to execute highly reliable authentication of individuals without imposing much burden on the user.

It is also possible to provide a cellular phone wherein different settings are read for setting or different applications are started or starting operation is limited in accordance with different attributes such as the users or eyes (right and left eyes) to be authenticated, thereby ensuring high efficiency even when same terminal is used by a plurality of users.

In the information device of the present invention, encoded iris information is used as authentic information as described in the preferred embodiment, but the authentic information in the information device of the present invention is not limited to this. For example, it is possible to use authentic information used in various well-known methods of living body authentication such as blood vessel patterns in the eye retina, face authentication by using the feature of a face, and fingerprint authentication.

It will be obvious to those having skill in the art that many changes may be made in the above-described details of the preferred embodiments of the present invention. The scope of the present invention, therefore, should be determined by the following claims.

### Reference Numerals

- 1: Cellular phone
- 2: Direct key section
- 3: Microphone
- 4: Speaker
- 5: Antenna
- 6: Display section
- 7: Upper casing
- 8: Joint
- 9: Lower casing
- 10: Hinge
- 11: Light source
- 13: Mirror
- 14: Aperture
- 15: Optical system
- 20: Image pickup
- 22: Visible light cut filter
- 23: Image pickup element
- 24: Signal processor
- 30: Display means
- 33: Character generator
- 41: User table
- 42: Control unit
- 45: Portable terminal
- 46: Information changeover unit
- 47: Arithmetic unit
- 48: Program memory
- 49: Data memory
- 50: Iris authenticating device
- 51: Iris information extractor
- 52: Iris information accumulator
- 53: Iris collating section
- 60: Pupil
- 70: Authenticating section
- 81: Focusing level determiner

## Claims

1. An information device for collating authentic information of authenticatees with registered authentic information, comprising:
an authentic information storage for storing said registered authentic information;
an information storage for storing specified information;
a read information storing section in which information on reading of said specified information is stored for each of said authenticatee;
a collating section for collating said authentic information of said authenticatee with said registered authentic information;
and an information reader for reading information corresponding to said authenticatee out of said specified information in accordance with information on reading of said specified information.

2. The information device of claim 1, wherein said information reader reads a mode setting program corresponding to said authenticatee from said information storage.

3. The information device of claim 1, wherein said information reader reads an application program corresponding to said authenticatee from said information storage.

4. The information device of claim 1 to claim 3, wherein said authentic information is information prepared from an eye image of said authenticatee.

5. The information device of claim 4, wherein said authentic information is encoded information of iris patterns.

6. The information device of claim 1 to claim 5, comprising an authentic information collector for collecting authentic information of said authenticatee.

7. The information device of claim 6, wherein said authentic information collector is an image photographing device which photographs an eye image of said authenticatee.

8. The information device of claim 1 to claim 7, comprising a display section for displaying the result of collation at said collating section.

9. An information device for collating authentic information of an authenticatee with registered authentic information, comprising:
an authentic information storage for storing said registered authentic information;
an information storage for storing specified information;
an attribute discriminator for discriminating attributes of said authenticatee;
a read information storing section in which information on reading of said specified information corresponding to the attribute of authentic information of said authenticatee is stored;
a collating section for collating said authentic information of said authenticatee with said registered authentic information; and
an information reader for reading information corresponding to the attribute discriminated at said attribute discriminator out of said specified information in accordance with information on reading of said specified information.

10. The information device of claim 9, wherein said information reader reads a mode setting program corresponding to the attribute of authentic information of said authenticatee out of said information storage.

11. The information device of claim 9, wherein said information reader reads an application program corresponding to the attribute of authentic information of said authenticatee out of said information storage.

12. The information device of claim 9 to claim 11, wherein said authentic information is information prepared from an eye image of said authenticatee.

13. The information device of claim 12, wherein said authentic information is encoded information of iris patterns.

14. The information device of claim 12 or claim 13, wherein said attribute is an attribute showing that said authentic information is the information of either right or left eye.

15. The information device of claim 9 to claim 14, wherein said attribute is an attribute showing the age of said authenticatee.

16. The information device of claim 9 to claim 15, further comprising an authentic information collector for collecting authentic information of said authenticatee.

17. The information device of claim 16, wherein said authentic information collector is an image photographing device which photographs an eye image of said authenticatee.

18. The information device of claim 9 to claim 17, further comprising a display section for displaying the result of collation at said collating section.

19. The information device of claim 9 to claim 18, further comprising a password input unit in which a password from said authenticatee is input,
wherein said attribute discriminator discriminates said attribute from the combination of authentic information of said authenticatee and said password.

20. The information device of claim 16 to claim 18, wherein authentic information of said authenticatee is collected a plurality of times, and said attribute discriminator discriminates said attribute from the combination of said authentic information obtained.
